# EUROPEAN PATENT APPLICATION

(11) **EP 2 336 976 A1**
(43) Date of publication of application: **22.06.2011**
(21) Application number: 09290978.7
(22) Date of filing: 21.12.2009
(51) Int. Cl.: G06T 15/00

(54) **System and method for providing virtiual environment**

(71) Applicant: Alcatel Lucent, 75008 Paris (FR)
(72) Inventor: Van den Broeck, Marc, 2860 Sint-Katelijne Waver (BE); Van Broeck, Sigurd, 2980 Zoersel (BE); Lou, Zhe, 2000 Antwerp (BE)
(74) Representative: BiiP cvba

(57) **Abstract**

The present invention is directed to a system for providing a virtual environment comprising: a. means for providing remote location reality images; b. means for providing a first and a second avatar, each corresponding to a respective first and second user; c. means for mixing the remote location reality images and the avatars in a mixed reality view; characterized in that the means for providing remote location reality images is adapted to provide reality images of the remote location where the first user is actually present in reality. The present invention is further related to a mixed reality street view mixer, adapted to mix reality images and avatars, characterized in that it is adapted to directly receive real time coordinates from a location tracking system and to request corresponding reality images of that location to a reality image map server.

## Description

### Field of the Invention

The present invention generally relates to systems for providing a virtual environment wherein reality images and avatars are mixed to a mixed reality view. The present invention is further related to a mixed reality street view mixer.

### Background of the Invention

As commonly known in the art, a virtual environment is a computer-based simulated environment intended for its users to inhabit and interact via avatars. These avatars are usually depicted as textual, two-dimensional, or three-dimensional graphical representations.

For example in US 6,798,407 and in US 5,966,130, systems are disclosed for enabling users to see and interact with each other as 2D avatars in computer generated environments in live. These patents describe a system adapted for use in a client server topology with the client systems including a personal computer, web camera, microphone, speakers and a broadband network connection.

Further, US 2009/0128555 teaches the implementation of a 3D avatar in the above systems using a 3D wire frame created from the user's image as captured by a video or camera.

Another state-of-the-art system is described in US 2008/0043040, wherein a user can type an address or name in a city within which he wants to view and/or communicate with another user. The system will provide an environment wherein satellite imagery and virtual imagery is mixed and wherein the users can navigate and communicate which each other.

The above state-of-the-art systems provide a variety of possibilities for users sitting behind their personal computer, not only seeking to chat with each other, but also seeking to meet each other in a virtual or a mixed reality environment.

A general disadvantage of the above systems is that both users need to have the availability of a device (e.g. a personal computer) allowing them to enter the virtual or a mixed reality environment in order to meet each other. If one of them is not able to enter the virtual environment, they are not able to meet there.

Further, the above systems do not provide possibilities for a user sitting behind his personal computer seeking to communicate with another person who is not sitting behind his personal computer, and to meet him at the location where he is actually present.

Vice versa, the above systems do not provide possibilities for a person present in reality at a certain location to share his experiences with a friend. The latter can connect to a street view map, such as Google Street View, and navigate to the location concerned, or, if his friend is connected to Google Latitude, he can also connect to see on a map where he is located. However, since street view images are dated, it is impossible to experience live events together.

Therefore, it is an objective of the present invention to disclose a system for providing a virtual environment wherein a user can communicate to and see another person while the latter is not able to enter the virtual environment.

Further, it is an objective of the present invention to disclose a system for providing a virtual environment wherein a user sitting behind his personal computer is able to meet another person at the location where he is actually present.

Still another object of the present invention is to disclose a system for providing a virtual environment wherein a person present in reality at a certain location is able to share his reality view and experiences with a friend who is not present at that location.

In a further object, the present invention proposes a system for providing a virtual environment providing a mixed reality view in real time.

The present invention meets the above objects by proposing a system for providing a virtual environment wherein the means for providing remote location reality images is adapted to provide reality images of the remote location where one of the users is actually present in reality.

### Summary of the Invention

The present invention is directed to a system for providing a virtual environment comprising:
a. means for providing remote location reality images;
b. means for providing a first and a second avatar, each corresponding to a respective first and second user;
c. means for mixing the remote location reality images and the avatars in a mixed reality view;
characterized in that the means for providing remote location reality images is adapted to provide reality images of the remote location where the first user is actually present in reality.

The present invention is further directed to a mixed reality street view mixer, adapted to mix reality images and avatars, characterized in that it is adapted to directly receive real time coordinates from a location tracking system and to request corresponding reality images of that location to a reality image map server.

### Brief Description of the Drawings

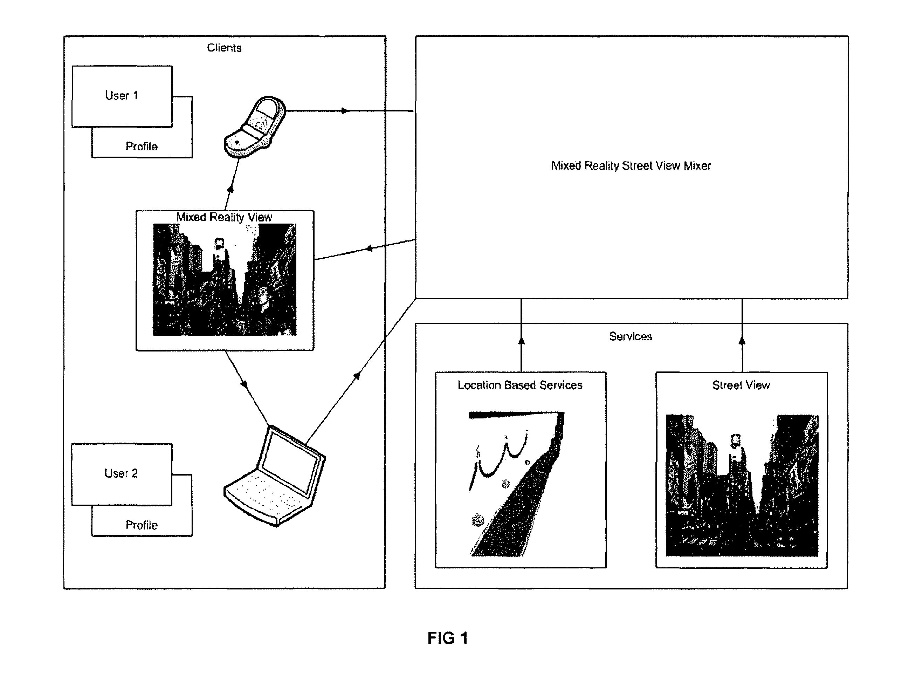

FIG 1 illustrates a particular embodiment of a system in accordance with the present invention.

### Detailed Description

In a first embodiment, the present invention provides a system for providing a virtual environment comprising:
a. means for providing remote location reality images;
b. means for providing a first and a second avatar, each corresponding to a respective first and second user;
c. means for mixing the remote location reality images and the avatars in a mixed reality view;
characterized in that the means for providing remote location reality images is adapted to provide reality images of the remote location where the first user is actually present in reality.

By using means for providing remote location reality images adapted to provide reality images of the remote location where the first user is actually present in reality, the second user can communicate to and see the first user in the mixed reality view while the latter is not able to enter the virtual environment.

Further, the system provides the second user sitting behind his personal computer the ability to meet the first user at the location where the latter is actually present.

Vice versa, the first person present in reality at a certain location is now given the possibility to share his reality view and experiences with a friend who is not present at the remote location.

In a first embodiment in accordance with the present invention, a system for providing a virtual environment is provided, wherein the remote location reality images may be triggered by the first user's coordinates in reality. Such coordinates may be determined by any location tracking system suitable for use in a system of the present invention, such as the Global Positioning System (GPS), Google Latitude system, triangulation, Femtocell system, etc.

In accordance with the present invention, the remote location reality images may comprise street view images. In the context of the present invention, street view refers to any visualisation tool for remote location imaging, such as for example "Google Street View". As understood by the person skilled in the art, street view may also apply to other similar tools like for example "Everyscape" (http://www.everyscape.com).

As an alternative or in addition to the forgoing embodiments, a system for providing a virtual environment may be provided, wherein the first user may be present at the remote location and equipped with a webcam, and wherein the remote location reality images may comprise live images taken by the first user's webcam. Alternatively, the live images may be taken by the first user's mobile phone camera, portable camera, etc.

In a particular system in accordance with the present invention, the first user may be equipped with means for determining the direction he is looking and wherein the remote location reality images may comprise street view images triggered by that direction. The means for determining the direction the first user is looking may be motion sensors and/or compass.

As understood by a person skilled in the art, the remote location reality images may comprise all combinations possible of street view images triggered by the first user's GPS coordinates, and/or live images taken by the first user's webcam, and/or street view images:triggered by the direction the first user is looking.

In another embodiment in accordance with the present invention, the avatars may be enabled to obtain and image personal representation data from its respective users. These personal representation data may be animation files provided by an avatar animation file server, or live webcam image data streamed by the user's webcam, or even live stereo camera data streamed by the user's stereo camera and transformed into a 3D-object.

Further in accordance with the present invention, the system may comprise means for oral communication between the first and second user.

In a further embodiment of the present invention, the system may comprise Location Based Services (LBS), for example to display some advertisement. If agreed to by the first user, advertisement may minimize his connection cost.

FIG 1 schematically illustrates a particular embodiment of a system for providing a virtual environment in accordance with the present invention, wherein:
- the GPS of the first user (user 1 at the client side) sends his coordinates to a mixed reality street view mixer application, which on his turn requests the corresponding street view map to a street view map server. Alternatively or in combination, the mixed reality street view mixer may also requests live images streamed by the first user's webcam: this refers to the means for providing remote location reality images adapted to provide reality images of the remote location where the first user is actually present in reality;
- based on the user-ID and profile of both users, the mixed reality street view mixer connects an avatar database server and requests the preferred avatar for a certain user: this refers to the means for providing a first and a second avatar, each corresponding to the respective first and second user;
- the mixed reality street view mixer application connects the first user (user 1 at the client side) to the second user (user 2 at the client side) via their user-ID and mixes the street view images and/or the first user's live images, together with both user's avatar to a mixed reality view which is then streamed to the user's respective display at the client side. The mixed reality street view mixer may also request available LBS data to a LBS server to additionally mix in the mixed reality view: this refers to the means for mixing the remote location reality images and the avatars in a mixed reality view.

Additionally, in accordance to the present invention, a mixed reality street view mixer is proposed, adapted to mix reality images and avatars, characterized in that it is adapted to directly receive real time coordinates from a location tracking system and to request corresponding reality images of that location to a reality image map server. By making the mixed reality street view mixer adapted to directly receive real time coordinates from a location tracking system and to request corresponding reality images of that location to a reality image map server, a system for providing a virtual environment comprising such mixed reality street view mixer may provide a user the ability to communicate to and see another user in a mixed reality view while the latter is not able to enter the virtual environment.

Further, a system for providing a virtual environment comprising such mixed reality street view mixer may provide a user sitting behind his personal computer the ability to meet the another user at the location where the latter is actually present.

Vice versa, a system for providing a virtual environment comprising such mixed reality street view mixer may give a person present in reality at a certain location the possibility to share his reality view and experiences with a friend who is not present at the remote location.

According to a particular embodiment in accordance with the present invention, a mixed reality street view mixer may be provided wherein the location tracking system is GPS.

In embodiment according to the present invention, the mixed reality street view mixer may be adapted to mix reality images comprising street view images.

Alternatively or in combination, the mixed reality street view mixer may be adapted to request live images of a user's webcam.

In a further embodiment according to the present invention, the mixed reality street view mixer may be adapted to request personal avatar representation data.

In still another embodiment, the mixed reality street view mixer may be further adapted to request Location Based Service data.

### EXAMPLE

David is visiting New York. He carries a 3G-phone equipped with a GPS tracking device. On his head, he has a baseball cap with a tiny webcam. Also on the baseball cap, motion sensors and a compass are provided to determine where David is looking at. David is waiting for Sigurd because they have an appointment together to discuss their project while exploring New York.

At home, Sigurd logs on to the internet. He has a pc with a webcam pointed to his face. Sigurd first establishes a connection with David. Because David is transmitting his coordinates, Sigurd's avatar is flying directly to David's avatar in the virtual world of New York. They meet each other in virtual New York where street view images and avatars are brought together to give a mixed reality. Both Sigurd and David can view on screen how they are standing side by side on the street. The Google Street View images provide Sigurd a photorealistic view of the street David is currently walking in.

A number of different views are now possible:
- A mixed third person view: Google Street View images are combined with the avatars of Sigurd and David in a 3D world. This view corresponds to what a real person walking in New York would expect to see if he would be looking at David and Sigurd walking by in real life.
- A second person view: Sigurd sees Google Street View images combined with David's avatar in a 3D world. David's avatar is wearing his real face that is streamed onto the avatar. This view corresponds to what Sigurd would expect to see if he actually would be walking next to David.
- A first person view: since the actual coordinates of David's position together with the actual position of his head (via the motion sensors and the compass) is known, Sigurd is able to see what David is actually looking at.

Whenever David starts walking, the representation of his avatar will follow David's every move. Like in a real environment, Sigurd can either follow David or stay behind for a while to look at a certain part of the scene.

## Claims

1. A system for providing a virtual environment comprising:
a. means for providing remote location reality images;
b. means for providing a first and a second avatar, each corresponding to a respective first and second user;
c. means for mixing the remote location reality images and the avatars
in a mixed reality view;
**characterized in that** the means for providing remote location reality images is adapted to provide reality images of the remote location where the first user is actually present in reality.

2. A system for providing a virtual environment according to claim 1, wherein the remote location reality images are triggered by the first user's GPS coordinates.

3. A system for providing a virtual environment according to claim 2, wherein the remote location reality images comprise street view images.

4. A system for providing a virtual environment according to claims 2 or 3, wherein the first user is equipped with means for determining the direction he is looking and wherein the remote location reality images comprise street view images triggered by that direction.

5. A system for providing a virtual environment according to claims 1 to 4, wherein the first user is equipped with a webcam, and wherein the remote location reality images comprise live images taken by the first user's webcam.

6. A system for providing a virtual environment according to any of the above claims, wherein the avatars are enabled to obtain and image personal representation data from its respective users.

7. A system for providing a virtual environment according to claim 6, wherein the personal representation data are live webcam image data.

8. A system for providing a virtual environment according to any of the above claims, comprising means for oral communication between the first and second user.

9. A system for providing a virtual environment according to any of the above claims, comprising Location Based Services.

10. A mixed reality street view mixer, adapted to mix reality images and avatars, **characterized in that** it is adapted to directly receive real time coordinates from a location tracking system and to request corresponding reality images of that location to a reality image map server.

11. A mixed reality street view mixer according to claim 10, wherein the location tracking system is GPS.

12. A mixed reality street view mixer according to claims 10 or 11, wherein the reality images comprise street view images.

13. A mixed reality street view mixer according to claims 10 to 12, further adapted to request live images of a user's webcam.

14. A mixed reality street view mixer according to claims 10 to 13, further adapted to request personal avatar representation data.

15. A mixed reality street view mixer according to claims 10 to 14, further adapted to request Location Based Service data.
